Europäisches Patentamt

European Patent Office

Office européen des brevets

(19)

(11) Numéro de publication : **0 681 246 A1**

(12) # DEMANDE DE BREVET EUROPEEN

(21) Numéro de dépôt : **95400960.1**

(22) Date de dépôt : **27.04.95**

(51) Int. Cl.⁶ : **G06F 15/80**

(30) Priorité : **02.05.94 FR 9405323**

(43) Date de publication de la demande :
**08.11.95 Bulletin 95/45**

(84) Etats contractants désignés :
**DE DK FR GB IT**

(71) Demandeur : **COMMISSARIAT A L'ENERGIE ATOMIQUE**
**31-33, rue de la Fédération**
**F-75015 Paris (FR)**

(72) Inventeur : **Herault, Laurent**
**69, Les Hauts de Furonnières**
**F-38640 Claix (FR)**

(74) Mandataire : **Dubois-Chabert, Guy et al**
**c/o BREVATOME**
**25, rue de Ponthieu**
**F-75008 Paris (FR)**

(54) **Procédé et dispositif d'extraction d'un sous-ensemble d'objets optimisant une mesure, en utilisant un réseau de neurones.**

(57)    L'invention concerne un procédé d'extraction d'un sous-ensemble d'objets optimisant une mesure, en utilisant un réseau de neurones, comprenant les étapes suivantes :

— une étape de construction d'un réseau de neurones récursif à partir des objets et des relations entre les objets en associant à chaque objet la sortie binaire d'un neurone formel $p_i(t)$ ;

— une étape d'utilisation d'un procédé d'inhibition afin d'obtenir des sous-ensembles d'objets deux à deux non en relation ou en relation, et de passer d'un sous-ensemble à un autre en essayant d'augmenter la qualité de la solution ;

— une étape d'initialisation de la sortie et du potentiel associé à chaque neurone ;

— une étape d'exploitation dynamique récursive du réseau ;

— une étape de choix parmi les sous-ensembles listés du meilleur par comparaison des qualités.

L'invention concerne également un dispositif d'extraction.

FIG. 1

## Domaine technique

La présente invention concerne un procédé et un dispositif d'extraction d'un sous-ensemble d'objets optimisant une mesure, en utilisant un réseau de neurones.

## Etat de la technique antérieure

Les réseaux neuromimétiques ont largement été étudiés depuis plusieurs années et des applications diverses ont été développées, notamment pour la résolution de problèmes d'optimisation, et de reconnaissance de formes.

Les réseaux neuromimétiques utilisent une information numérique et sont des systèmes qui effectuent des calculs inspirés du comportement des neurones physiologiques. Un modèle neuromimétique est caractérisé par trois constituants de base : un réseau de neurones formels, une règle d'activation et une dynamique d'évolution.

Le réseau est composé d'un ensemble de neurones formels. Un neurone formel est une unité de calcul constituée d'une entrée, appelée potentiel (noté $u$) et d'une sortie, correspondant à un niveau d'activation numérique (noté $p$). A chaque instant, le niveau d'activation de chaque neurone est communiqué aux autres neurones. Les neurones sont en effet connectés ensemble par des connexions pondérées, appelées poids synaptiques. Le poids de la connexion entre la sortie du neurone $i$ et l'entrée du neurone $j$ est noté $w_{ij}$. La quantité totale d'activation en entrée $u_j$ que le neurone $j$ reçoit des autres neurones à chaque instant est utilisée par ce neurone pour mettre à jour sa sortie. On l'appelle parfois potentiel (ou potentiel d'activation) du neurone $j$.

La règle d'activation d'un modèle neuromimétique est une procédure locale que chaque neurone suit en mettant à jour son niveau d'activation en fonction du contexte d'activation des autres neurones. La sortie d'un neurone est ainsi donnée par une fonction de transfert non-linéaire appliquée au potentiel. Cette fonction non-linéaire peut être une fonction à seuil, appelée aussi fonction de Mac-Cullogh et Pitts, et définie, pour le neurone i considéré à la date $t$, par:

$$\begin{cases} p_i(t) = 1 & si \ u_i(t) > 0 \\ p_i(t) = 0 & si \ u_i(t) < 0 \\ p_i(t) = p_i(t-1) & si \ u_i = 0 \end{cases} \quad (1)$$

La dynamique d'évolution est la règle permettant la mise à jour des neurones. Au départ ($t=0$), les sorties des neurones sont tirées aléatoirement ( 0 ou 1). Puis le réseau évolue en mettant à jour ses neurones. Pour mettre à jour un neurone $i$ à l'instant $t$, on calcule son potentiel à cette date ;

$$u_i(t) = u_i(t-1) + \Delta u_i(t) \quad (2)$$

La variation de potentiel $\Delta u_i(t)$ va correspondre à la dynamique d'évolution. Différents modèles existent dans l'art connu pour définir cette dynamique. Suivant le signe de $\Delta u_i(t)$ entre deux mises à jour du neurone $i$, on dit que le neurone est inhibé (variation de potentiel négative qui tend à mettre la sortie à 0) ou excité (variation de potentiel positive qui tend à mettre la sortie à 1). Si son potentiel est strictement positif, le neurone met sa sortie à 1: il est activé. Si son potentiel est strictement négatif, il met sa sortie à 0: il est désactivé. Si son potentiel est nul, la valeur de la sortie reste inchangée. Ainsi, la sortie du neurone $i$ peut être amenée à changer entre deux mises à jour. On dit que le réseau a convergé si, pour chaque neurone, aucune mise à jour ne modifie le potentiel du neurone.

Le mode de convergence est défini par l'ordre dans lequel sont mis à jour les neurones. Son choix est de grande importance pour la qualité de la convergence. Le mode de convergence peut être :
- asynchrone: un neurone est mis à jour à la fois. La nouvelle sortie calculée lors de sa mise à jour sert à la mise à jour des autres neurones. Les neurones peuvent être mis à jour séquentiellement dans un ordre fixé (on parle de mode asynchrone séquentiel) ou aléatoirement (on parle de mode asynchrone aléatoire);
- synchrone : tous les neurones sont mis à jour simultanément;
- synchrone par bloc: on met à jour de façon synchrone des blocs de neurones.

On va à présent présenter quelques dynamiques d'évolution conçues pour résoudre des problèmes d'optimisation.

Le modèle ayant servi de base aux principaux algorithmes neuronaux d'optimisation est le modèle présenté par J. Hopfield et D. Tank dans l'article intitulé "Neural computation of decizions in optimization problems" (Biological Cybemetics, vol. 52, pages : 141-152, 1985). Ils définissent une fonction énergie E:

$$E = -\frac{1}{2}\sum_{i=1}^{n}\sum_{j=1}^{n} w_{ij} \cdot p_{ij} \cdot p_j - \sum_{i=1}^{n} I_i \cdot p_i \qquad (3)$$

Les sorties neuronales $P_i$ sont analogiques, comprises entre 0 et 1, et $I_i$ représente un biais d'entrée. Cette énergie peut être vue comme l'énergie physique d'un système de verres de spins. L'énergie E codant le problème, le problème revient à minimiser cette énergie à la convergence du réseau. J. Hopfield, dans un article intitulé "Neural networks and physical systems with emergent collective computational abilities" (proceedings of the National Academy of Sciences, vol. 79, pages 2554-2558, 1982) démontre (théorème de Hopfield) que:
- si la dynamique d'évolution du réseau est:

$$\Delta u_i(t) = -\frac{\Delta E}{\Delta p_i}(t)$$

- si la régle d'activation utilisée est celle de Mc Culloch-Pitts,
- et si la matrice des poids synaptiques est symétrique ($w_{ij} = w_{ji}$),
- alors, pour tout neurone $i$, et à toute date $t$ :

$$\frac{\Delta E}{\Delta t}(t) \leqq 0$$

Ainsi l'énergie va décroître, au cours de l'évolution du système, jusqu'à atteindre un minimum.

Dans l'art antérieur, l'opérateur ajuste des paramètres pour établir des compromis entre la satisfaction des contraintes et l'optimisation de la mesure.

Le procédé de l'invention permet de savoir si une solution est ou n'est pas en relation avec les autres. Cette connaissance garantit à la fois la satisfaction de toutes les contraintes liées à l'applicaiton considérée et l'optimisation de la mesure.

L'objet de l'invention est de proposer un procédé et un dispositif d'extraction d'un sous-ensemble d'objets issus d'un ensemble, deux à deux non en relation ou en relation et optimisant une mesure qui peuvent avantageusement utiliser un réseau neuromimétique original.

Objet de l'invention

L'invention concerne un procédé d'extraction d'un sous-ensemble d'objets, tels que des trajectoires potentielles dans une application de vélocimétrie, optimisant une mesure, en utilisant un réseau de neurones, caractérisé en ce qu'il comprend les étapes suivantes:
- une étape de construction d'un réseau de neurones récursif à partir des objets et des relations entre les objets en associant à chaque objet la sortie binaire d'un neurone formel $p_i(t)$ à une date $t$ :

$p_i(t) = 1 \Rightarrow$ l'objet appartient au sous-ensemble recherché.
$p_i(t) = 0 \Rightarrow$ l'objet n'appartient pas au sous-ensemble recherché;
- une étape d'utilisation d'un procédé d'inhibition afin d'obtenir des sous-ensembles d'objets deux à deux non en relation ou en relation, et de passer d'un sous-ensemble à un autre en essayant d'augmenter la qualité de la solution;
- une étape d'initialisation de la sortie et du potentiel associé à chaque neurone;
- une étape d'exploitation dynamique récursive du réseau;
- une étape de choix parmi les sous-ensembles listés du meilleur par comparaison des qualités.

Avantageusement, l'étape d'initialisation de la sortie et du potentiel associée à chaque neurone est telle que la sortie et le potentiel associé à chaque neurone vérifient, pour chaque neurone, les conditions suivantes:
- sur les sorties des neurones: si on initialise un neurone $i$ avec une sortie qui vaut 1 (neurone activé), alors les neurones $j$ correspondant à des objets en relation avec l'objet $i$($e_{ij} = 1$) doivent être désactivés.

$$(p_i(t=0)=1) \Rightarrow (\forall j \in \{1....N\} \quad e_{ij}=1 \Rightarrow p_j(t=0)=0)$$

- sur les potentiels:
$p_i(t=0) = 1 \Leftrightarrow u_i(t=0) \geqq 0$
$p_i(t=0) = 0 \Leftrightarrow u_i(t=0) \leqq 0$

Avantageusement dans le cas de recherche d'objets deux à deux en relation, l'étape d'inititialisation de la sortie et du potentiel associés à chaque neurone est telle que la sortie et le potentiel associé à chaque neurone vérifient, pour chaque neurone, les conditions suivantes:
- sur les sorties des neurones: si on initialise un neurone $i$ avec une sortie qui vaut 1 (neurone activé), alors les neurones $j$ correspondant à des objets non en relation avec l'objet $i$($e_{ij} = 0$) doivent être désac-

tivés.

$$(p_i(t=0)=1) \Rightarrow (\forall j \in \{1....N\} \quad e_{ij}=0 \Rightarrow p_j(t=0)=0)$$

- sur les potentiels:

$p_i(t=0) = 1 \Leftrightarrow u_i(t=0) \geqq 0$

$p_i(t=0) = 0 \Leftrightarrow u_i(t=0) \leqq 0$

Avantageusement l'étape d'exploitation dynamique récursive du réseau comprend une mise à jour de l'ensemble des neurones du réseau dans un certain ordre (par exemple aléatoire ou séquentiel) en considérant simultanément les neurones d'un bloc constitué d'un neurone $i$ (centre) et les neurones $j$ voisins associés aux objets en relation ou respectivement non en relation avec l'objet (neurones $j$ pour lesquels $e_{ij}$ = 1, respectivement $e_{ij}$ = 0) (on parle de mode de convergence synchrone par bloc). Pour mettre à jour ce bloc, on applique simultanément aux potentiels des divers neurones du bloc des corrections, corrections dépendantes des valeurs des sorties des autres neurones et des relations existant entre les objets, l'expression mathématique de la correction à appliquer au potentiel d'un neurone différant suivant qu'il est considéré comme centre d'un bloc ou comme voisins d'un centre d'un autre bloc. Les corrections sont définies de telle sorte que dès qu'un neurone $i$ est activé, tous les neurones $j$ vérifiant $e_{ij}$ = 1 ou respectivement $e_{ij}$ = 0 sont désactivés au même instant.

L'invention concerne également un dispositif qui comprend un réseau de neurones comportant:

- un circuit de choix d'un entier $i$ entre 1 à N;
- une première mémoire table des valeurs des sorties $p_i$ des neurones reliée à la sortie du circuit de choix d'un entier;
- une seconde mémoire table des voisins de chaque neurone reliée à la sortie du circuit de choix d'un entier;
- une troisième mémoire des relations entre les objets reliée à l'entrée de la seconde mémoire ;
- une quatrième mémoire des potentiels des neurones reliée à la sortie de la seconde mémoire, à la sortie du circuit de choix d'un entier;
- une cinquième mémoire contenant la valeur courante de la fonction qualité E à optimiser reliée à la sortie de la première mémoire;
- un premier circuit de calcul permettant de calculer la variation de potentiel à appliquer au neurone $i$ relié à la sortie du circuit de choix d'un entier, à la sortie de la cinquième mémoire, à la sortie de la troisième mémoire et à la sortie de la première mémoire;
- un second circuit de calcul permettant de calculer la variation de potentiel à appliquer aux neurones voisins du neurone $i$ relié aux sorties du circuit de choix et des cinquième, troisième et première mémoires;
- un premier additionneur recevant les sorties du premier circuit de calcul et de la quatrième mémoire et relié en entré à la quatrième mémoire;
- au moins un second additionneur recevant les sorties du second circuit de calcul et de la quatrième mémoire et relié en entrée à la quatrième mémoire;
- au moins deux circuits fonctions de seuillage binaire F reliés respectivement aux sorties de ces deux additionneurs et à l'entrée de la première mémoire.

Ce réseau de neurones s'applique aux procédés de gestion optimale de moyens au cours du temps concernant de façon générale:

- la vélocimétrie;
- la résolution des problèmes de routage dans les réseaux de télécommunication;
- l'optimisation des communications entre satellites;
- l'optimisation de géométrie de disposition de composants dans la C.A.O.;
- la planification des horaires de trains de vols;
- la planification de la production industrielle.

## Brève description des dessins

- La figure 1 illustre les différentes étapes du procédé de l'invention;

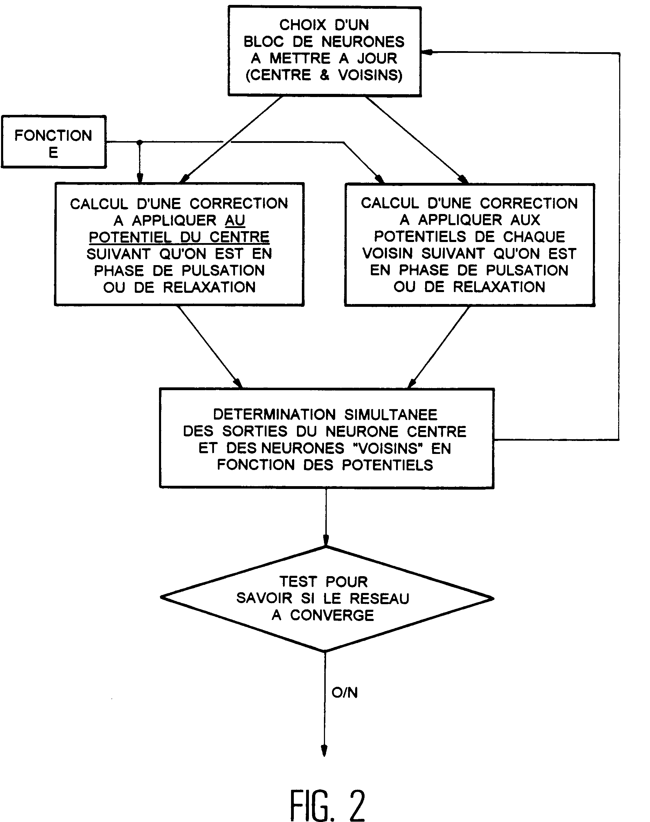

- la figure 2 illustre l'étape d'exploitation dynamique;
- la figure 3 illustre un réseau de neurones associé au dispositif de mise en oeuvre du procédé de l'invention.

## Exposé détaillé de modes de réalisation

Le lexique situé en fin de description fait partie de la description.

Pour faciliter la description on présentera dans la suite le cas où l'on cherche des sous-ensembles deux à deux non en relation. Bien entendu le procédé de l'invention s'applique également à la recherche de sous-ensembles d'objets deux à deux en relation en substituant à la matrice $(e_{ij})$ des relations, la matrice $(1-e_{ij})$.

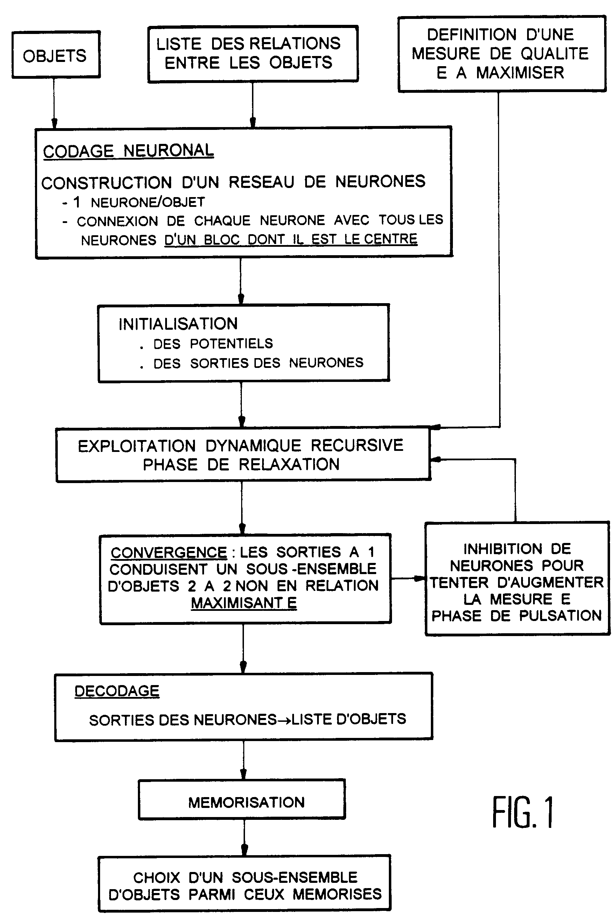

Le procédé de l'invention comprend plusieurs étapes, illustrées sur la figure 1.

On utilise un réseau de neurones formels et apte à déterminer un sous-ensemble d'objets deux à deux non en relation de qualité maximum, où la qualité est mesurée par une fonction quelconque $E(\{p_i\})$ des sorties des neurones. On a les étapes suivantes:

- construction d'un réseau de neurones récursifs à partir des objets et des relations entre les objets en associant à chaque objet la sortie binaire d'un neurone formel $p_i(t)$:

  $p_i(t) = 1 \Rightarrow$ l'objet appartient au sous-ensemble recherché,

  $p_i(t) = 0 \Rightarrow$ l'objet n'appartient pas au sous-ensemble recherché;

- utilisation d'un procédé d'inhibition afin d'obtenir des sous-ensembles d'objets deux à deux non en relation. On passe d'un sous-ensemble à un autre en essayant d'augmenter la qualité de la solution;

- initialisation de la sortie et du potentiel associé à chaque neurone de telle sorte qu'ils vérifient, pour chaque neurone, les conditions suivantes:

  . sur les sorties des neurones: si on initialise un neurone $i$ avec une sortie qui vaut 1 (neurone activé), alors les neurones $j$ correspondant à des objets en relation avec l'objet $i(e_{ij} = 1)$ doivent être désactivés,

$$( p_i(t=0) = 1) \Rightarrow (\forall j \in \{1,...,N\} \quad e_{ij} = 1 \Rightarrow p_j(t=0) = 0)$$

  . sur les potentiels:

  $p_i(t = 0) = 1 \Leftrightarrow u_i(t = 0) \geqq 0$

  $p_i(t = 0) = 0 \Leftrightarrow u_i(t = 0) \leqq 0$

- exploitation dynamique récursive du réseau: on réalise une mise à jour de l'ensemble des neurones du réseau dans un certain ordre (par exemple aléatoire ou séquentiel) en considérant simultanément les neurones d'un bloc constitué d'un neurone $i$ (centre) et des neurones voisins associés aux objets en relation avec l'objet $i$ (neurones $j$ pour lesquels $e_{ij} = 1$).

  Pour mettre à jour ce bloc, on applique simultanément aux potentiels des neurones du bloc des corrections dépendantes des valeurs des sorties des autres neurones et des relations existant entre les objets. L'expression mathématique de la correction à appliquer au potentiel d'un neurone diffère suivant qu'il est considéré comme centre d'un bloc ou comme voisin d'un centre d'un autre bloc.

  Les corrections sont définies de telle sorte que dès qu'un neurone $i$ est activé, tous les neurones $j$ vérifiant $e_{ij} = 1$ sont désactivés au même instant.

  L'exploitation dynamique génère des sous-ensembles d'objets deux à deux en relation, chacun des sous-ensembles pouvant être associé à un maximum local de la fonction qualité.

  A chaque fois que le réseau a convergé, on obtient après décodage des sorties des neurones, un sous-ensemble d'objets deux à deux non en relation maximisant (localement) la fonction qualité. On mémorise chacun de ces sous-ensembles. Globalement on obtient une liste de sous-ensembles solutions.

- choix parmi les sous-ensembles listés du meilleur par comparaison des qualités.

## Exploitation dynamique récursive de ce second réseau de neurones

On met à jour le "bloc" de neurones ( $i$ et les neurones $j$ en relation avec $i$) correspondant de façon synchrone (tous les neurones du bloc sont mis à jour simultanément) en considérant le neurone $i$ comme "centre" du bloc et les neurones $j$ comme "voisins" du centre.

L'exploitation dynamique consiste donc à balayer l'ensemble des blocs de neurones dans un certain ordre (dynamique asynchrone) et à mettre à jour les neurones de chaque bloc de manière synchrone: on parle de dynamique synchrone par bloc ou bloc-synchrone.

## Détermination de la correction à appliquer au potentiel $u_i$ d'un neurone $i$ à une date $t$

Elle diffère suivant que le neurone dont on veut corriger le potentiel est considéré comme centre d'un bloc ou comme voisin d'un autre centre.

Quand on considère un bloc de neurone de centre $i$ et de voisins $V=\{j\}$ (pour tout $j$ dans $V$, $e_{ij}=1$)à la date

$t$, on regarde si le neurone $i$ est activé ou non:
- si le neurone $i$ est activé, on laisse le bloc inchangé;
- si le neurone $i$ est désactivé, on exécute les étapes qui suivent:
  - on mémorise la valeur de la mesure de la qualité obtenue à la date

$$t - 1 : E\left(\left\{ p_j(t-1) \right\}\right) ;$$

  - on teste l'évolution suivante du réseau: on active le neurone $i$ et on désactive les neurones $j$ voisins si ceux-ci sont activés. On en déduit la variation de la mesure de la qualité correspondante

$$\Delta E\left(\left\{ p_j(t-1) \right\}\right).$$

A) La correction à appliquer au potentiel du neurone $i$ est donnée par une combinaison linéaire de deux termes:
  - un terme qui a pour but d'exciter le neurone $i$, s'il est désactivé, avec une certaine probabilité en fonction de la valeur de

$$\Delta E\left(\left\{ p_j(t-1) \right\}\right).$$

Par exemple l'excitation peut être donnée par:
  - 

$$\max\left(0, \Delta E\left(\left\{ p_j(t-1) \right\}\right)\right),$$

  - 

$$\left(1 - p_i(t)\right).\max\left(0, \Delta E\left(\left\{ p_j(t-1) \right\}\right)\right),$$

  - une procédure de Metropolis à une certaine température dans une méthode de recuit simulé,
  - une procédure de Creutz à une certaine énergie dans une méthode de recuit microcanonique.

Si le réseau a été mis à jour moins d'un certain nombre de fois depuis la dernière convergence, alors on applique une inhibition pour essayer d'augmenter, à la convergence suivante, la qualité du sous-ensemble d'objets déterminé lors de la dernière convergence du réseau. Autrement un procédé d'interruption stoppe la prise en compte de cette inhibition.

Par exemple, cette inhibition peut consister à:
  - inhiber un certain nombre de neurones, fixé par l'utilisateur, tirés aléatoirement,
  - inhiber un nombre aléatoire de neurones tirés aléatoirement,
  - inhiber des neurones parmi ceux qui correspondent à des objets incompatibles avec beaucoup d'autres.

Globalement, le réseau alterne des phases de pulsation (quand cette dernière inhibition est prise en compte) et des phases de relaxation (quand le procédé d'interruption stoppe la prise en compte de l'inhibition). Au cours de la phase de relaxation, le réseau converge. Une fois que le réseau a convergé, on applique à nouveau une inhibition (phase de pulsation). On alterne ainsi des phases de pulsation et de relaxation un certain nombre de fois, fixé par l'utilisateur (en fonction du temps qu'il a pour trouver une solution, de la qualité de la solution qu'il recherche). A l'issue de chaque phase de relaxation, c'est-à-dire à chaque convergence, les neurones dont la sortie vaut 1 codent un sous-ensemble d'objets deux à deux non en relation.

B) La correction à appliquer au potentiel de neurone $j$ voisin de $i$ à la date $t$ est donnée par un terme qui a pour but d'inhiber le neurone $j$ d'une quantité égale à l'excitation reçue par le neurone $i$ à la même date. Par exemple, l'inhibition peut être donnée par:
  - 

$$-e_{ij}.\max\left(0, \Delta E\left(\left\{ p_j(t-1) \right\}\right)\right)$$

si l'excitation sur $i$ à $t$ vaut

$$\max\left(0, \Delta E\left(\left\{p_j(t-1)\right\}\right)\right)$$

- 

$$-\left(1 - p_i(t)\right).e_{ij}.\max\left(0, \Delta E\left(\left\{p_j(t-1)\right\}\right)\right)$$

si l'excitation sur $i$ à $t$ vaut

$$\left(1 - p_i(t)\right).\max\left(0, \Delta E\left(\left\{p_j(t-1)\right\}\right)\right)$$

Avantageusement on borne le potentiel de chaque neurone entre deux valeurs fixées par l'utilisateur pour accélérer la convergence. Par exemple:
- on borne le potentiel entre des valeurs de l'ordre de grandeur des corrections à appliquer au potentiel quand le neurone est mis à jour;
- on borne les valeurs des potentiels entre $-10^{-\infty}$ et $10^{-\infty}$: ainsi toute correction strictement négative à appliquer sur le potentiel d'un neurone activé le désactive et toute correction strictement positive à appliquer sur le potentiel d'un neurone désactivé l'active.

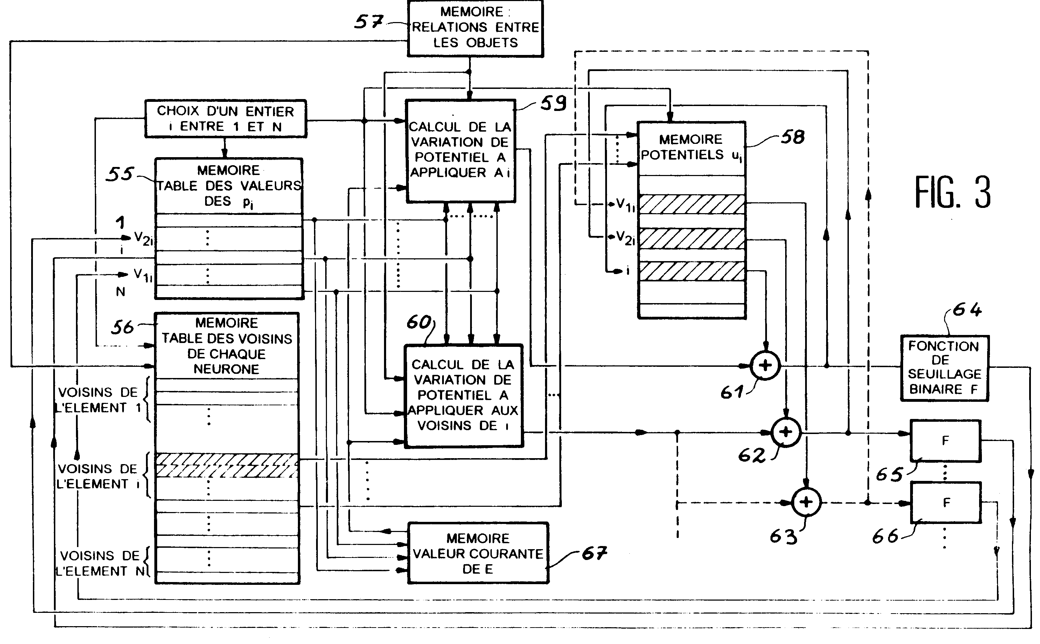

La figure 3 donne un dispositif associé à ce réseau de neurones en phase de relaxation. Ce réseau comprend:
- une première mémoire 55 table des valeurs des sorties $p_i$ des neurones;
- une seconde mémoire table 56 liste des voisins de chaque neurone;
- une troisième mémoire 57 des relations entre les objets;
- une quatrième mémoire 58 des potentiels des neurones;
- une cinquième mémoire 67;
- un premier circuit de calcul 59 permettant de calculer la variation de potentiel à appliquer au neurone $i$ ;
- un second circuit de calcul 60 permettant de calculer la variation de potentiel à appliquer aux neurones voisins du neurone $i$;
- un premier additionneur 61 recevant les sorties du premier circuit de calcul et de la quatrième mémoire;
- au moins un second additionneur 62 recevant les sorties du second circuit de calcul et de la quatrième mémoire ;
- au moins deux circuits 64 et 65 fonctions de seuillage binaire $F$ reliés respectivement aux sorties de ces deux additionneurs.

Dans le cas d'un dispositif numérique, ces différents éléments sont connectés (directement ou indirectement) à une horloge.

## LEXIQUE

### Objet

Un objet est une trajectoire potentielle dans une application de vélocimétrie.

### Neurone

Un neurone $i$ est défini par un potentiel $u_i$ et par une sortie binaire $p_i$. Quand, au cours de l'exploitation dynamique du réseau, le neurone est considéré à la date $t$, alors:
- on calcule une correction $\Delta u_i(t)$ à appliquer au potentiel $u_i(t+1) = u_i(t) + \Delta u_i(t)$ ;
- on met à jour la sortie:

si $u_i(t + 1) > 0$ alors $p_i(t + 1) = 1$

si $u_i(t + 1) < 0$ alors $p_i(t + 1) = 0$

neurone activé        $p_i = 1$

neurone désactivé      $p_i = 0$

### Relation

Expression de l'incompatibilité de deux trajectoires potentielles dans une application de vélocimétrie.

On a un ensemble d'objets dont on cherche à extraire un sous-ensemble vérifiant une certaine propriété basée sur des relations entre les objets. Considérés deux par deux, il existe ou non une relation (issue d'une application) entre les objets.

Si un objet $i$ est en relation avec un objet $j$, alors $e_{ij} = 1$. Sinon $e_{ij} = 0$.($e_{ij}$) est la matrice des relations entre les objets.

<u>Remarque</u> Le procédé est équivalent à rechercher le sous-ensemble d'objets maximisant la mesure E. Il suffit pour cela de considérer la matrice (1- $e_{ij}$) et d'utiliser le procédé décrit dans la présente invention.

**Revendications**

1. Procédé d'extraction d'un sous-ensemble d'objets, tels que des trajectoires potentielles dans une application de vélocimétrie, optimisant une mesure, en utilisant un réseau de neurones, caractérisé en ce qu'il comprend les étapes suivantes:
   - une étape de construction d'un réseau de neurones récursif à partir des objets et des relations entre les objets en associant à chaque objet la sortie binaire d'un neurone formel $p_i(t)$ à une date $t$:
   $p_i(t) = 1 \Rightarrow$        l'objet appartient au sous-ensemble recherché.
   $p_i(t) = 0 \Rightarrow$        l'objet n'appartient pas au sous-ensemble recherché:
   - une étape d'utilisation d'un procédé d'inhibition afin d'obtenir des sous-ensembles d'objets deux à deux non en relation ou deux à deux en relation, et de passer d'un sous-ensemble à un autre en essayant d'augmenter la qualité de la solution;
   - une étape d'initialisation de la sortie et du potentiel associé à chaque neurone;
   - une étape d'exploitation dynamique récursive du réseau;
   - une étape de choix parmi les sous-ensembles listés du meilleur par comparaison des qualités.

2. Procédé selon la revendication 1, caractérisé en ce que dans le cas de recherche d'objets deux à deux non en relation l'étape d'initialisation de la sortie et du potentiel associés à chaque neurone est telle que la sortie et le potentiel associé à chaque neurone vérifient, pour chaque neurone, les conditions suivantes:
   - sur les sorties des neurones: si on initialise un neurone $i$ avec une sortie qui vaut 1 (neurone activé), alors les neurones $j$ correspondant à des objets en relation avec l'objet $i$ ($e_{ij} = 1$) doivent être désactivés.

$$( p_i(t=0) = 1) \Rightarrow (\forall j \in \{1.....N\} \quad e_{ij} = 1 \Rightarrow p_j(t=0) = 0)$$

   - sur les potentiels:
   $p_i(t = 0) = 1 \Leftrightarrow u_i(t = 0) \geqq 0$
   $p_i(t = 0) = 0 \Leftrightarrow u_i(t = 0) \leqq 0$

3. Procédé selon la revendication 1, caractérisé en ce que dans le cas de recherche d'objets deux à deux en relation l'étape d'initialisation de la sortie et du potentiel associés à chaque neurone est telle que la sortie et le potentiel associé à chaque neurone vérifient, pour chaque neurone, les conditions suivantes:
   - sur les sorties des neurones: si on initialise un neurone $i$ avec une sortie qui vaut 1 (neurone activé), alors les neurones $j$ correspondant à des objets non en relation avec l'objet $i$ ($e_{ij} = 0$) doivent être désactivés.

$$( p_i(t=0) = 1) \Rightarrow (\forall j \in \{1.....N\} \quad e_{ij} = 0 \Rightarrow p_j(t=0) = 0)$$

   - sur les potentiels:
   $p_i(t = 0) = 1 \Leftrightarrow u_i(t = 0) \geqq 0$
   $p_i(t = 0) = 0 \Leftrightarrow u_i(t = 0) \leqq 0$

4. Procédé selon l'une quelconque des revendications précédentes, caractérisé en ce que l'étape d'exploitation dynamique récursive du réseau comprend une mise à jour de l'ensemble des neurones du réseau dans un certain ordre (par exemple aléatoire ou séquentiel) en considérant simultanément les neurones d'un bloc constitué d'un neurone $i$ (centre) et les neurones $j$ voisins associés aux objets en relation avec l'objet (neurones $j$ pour lesquels $e_{ij} = 1$), pour mettre à jour ce bloc, en ce qu'on applique aux potentiels des divers neurones des corrections, corrections dépendantes des valeurs des sorties des autres neurones et des relations existant entre les objets, l'expression mathématique de la correction à appliquer au potentiel d'un neurone différant suivant qu'il est considéré comme centre d'un bloc ou comme voisins d'un centre d'un autre bloc, et en ce que les corrections sont définies de telle sorte que dès qu'un neurone

$i$ est activé, tous les neurones $j$ vérifiant $e_{ij}= 1$ sont désactivés au même instant.

5. Dispositif d'extraction d'un sous-ensemble d'objets, tels que des trajectoires potentielles dans une application de vélocimétrie, optimisant une mesure, en utilisant un réseau de neurones, caractérisé en ce que ce réseau de neurones comprend:
   - un circuit (50) de choix d'un entier $i$ entre 1 et $N$;
   - une première mémoire (55) table des valeurs des sorties $p_i$ des neurones relfiée à la sortie du circuit (50) de choix d'un entier;
   - une seconde mémoire (56) table des voisins de chaque neurone reliée à la sortie du circuit (50) de choix d'un entier;
   - une troisième mémoire (57) des relations entre les objets reliée à l'entrée de la seconde mémoire (56);
   - une quatrième mémoire (58) des potentiels des neurones reliée à la sortie de la seconde mémoire (56), à la sortie du circuit (50) de choix d'un entier;
   - une cinquième mémoire (67) contenant la valeur courante de la mesure à optimiser reliée à la sortie de la première mémoire (55);
   - un premier circuit de calcul (59) permettant de calculer la variation de potentiel à appliquer au neurone $i$ relié à la sortie du circuit (50) de choix d'un entier, à la sortie de la cinquième mémoire (67), à la sortie de la troisième mémoire (57) et à la sortie de la première mémoire (55);
   - un second circuit de calcul (60) permettant de calculer la variation de potentiel à appliquer aux neurones voisins du neurone $i$ relié aux sorties du circuit de choix et des cinquième, troisième et première mémoires;
   - un premier additionneur (61) recevant les sorties du premier circuit de calcul et de la quatrième mémoire et relié en entrée à la quatrième mémoire;
   - au moins un second additionneur (62) recevant les sorties du second circuit de calcul et de la quatrième mémoire et relié en entrée à la quatrième mémoire;
   - au moins deux circuits fonctions de seuillage binaire $F$ (64, 65) reliés respectivement aux sorties de ces deux additionneurs et à l'entrée de la première mémoire.

OBJETS

LISTE DES RELATIONS
ENTRE LES OBJETS

DEFINITION D'UNE
MESURE DE QUALITE
E A MAXIMISER

CODAGE NEURONAL

CONSTRUCTION D'UN RESEAU DE NEURONES
- 1 NEURONE/OBJET
- CONNEXION DE CHAQUE NEURONE AVEC TOUS LES
  NEURONES D'UN BLOC DONT IL EST LE CENTRE

INITIALISATION
. DES POTENTIELS
. DES SORTIES DES NEURONES

EXPLOITATION DYNAMIQUE RECURSIVE
PHASE DE RELAXATION

CONVERGENCE : LES SORTIES A 1
CONDUISENT UN SOUS -ENSEMBLE
D'OBJETS 2 A 2 NON EN RELATION
MAXIMISANT E

INHIBITION DE
NEURONES POUR
TENTER D'AUGMENTER
LA MESURE E
PHASE DE PULSATION

DECODAGE

SORTIES DES NEURONES→LISTE D'OBJETS

MEMORISATION

FIG. 1

CHOIX D'UN SOUS-ENSEMBLE
D'OBJETS PARMI CEUX MEMORISES

CHOIX D'UN
BLOC DE NEURONES
A METTRE A JOUR
(CENTRE & VOISINS)

FONCTION
E

CALCUL D'UNE CORRECTION
A APPLIQUER AU
POTENTIEL DU CENTRE
SUIVANT QU'ON EST EN
PHASE DE PULSATION
OU DE RELAXATION

CALCUL D'UNE CORRECTION
A APPLIQUER AUX
POTENTIELS DE CHAQUE
VOISIN SUIVANT QU'ON EST
EN PHASE DE PULSATION
OU DE RELAXATION

DETERMINATION SIMULTANEE
DES SORTIES DU NEURONE CENTRE
ET DES NEURONES "VOISINS" EN
FONCTION DES POTENTIELS

TEST POUR
SAVOIR SI LE RESEAU
A CONVERGE

O/N

FIG. 2

FIG. 3

EP 0 681 246 A1

EP 0 681 246 A1

Office européen
des brevets

**RAPPORT DE RECHERCHE EUROPEENNE**

Numero de la demande

EP 95 40 0960

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 210 798 (EKCHIAN) 11 Mai 1993<br>* abrégé *<br>--- | 1 | G06F15/80 |
| A | 1991 IEEE INTERNATIONAL JOINT CONFERENCE ON NEURAL NETWORKS,<br>vol. 1, 18 Novembre 1991 SINGAPORE,<br>pages 226-231,<br>HOSHINO 'Optimal control with a recurrent neural network and a priori knowledge of the system'<br>* abrégé *<br>--- | 1 | |
| A | EP-A-0 475 732 (FUJITSU LIMITED) 18 Mars 1992<br>* colonne 1, ligne 3 - colonne 5, ligne 10; figures 1-4 *<br>--- | 1,5 | |
| A | EP-A-0 529 628 (TOYODA KOKI KABUSHIKI KAISHA) 3 Mars 1993<br>* page 3, ligne 40 - ligne 54; figure 1 *<br>----- | 5 | |

DOMAINES TECHNIQUES
RECHERCHES (Int.Cl.6)

G06F

Le présent rapport a été établi pour toutes les revendications

| Lieu de la recherche | Date d'achèvement de la recherche | Examinateur |
|---|---|---|
| LA HAYE | 14 Juin 1995 | Schenkels, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

13